(19)

Europäisches
Patentamt
European
Patent Office
Office européen
des brevets

(11) **EP 4 648 005 A1**

(12) **EUROPEAN PATENT APPLICATION**
published in accordance with Art. 153(4) EPC

(43) Date of publication:
**12.11.2025 Bulletin 2025/46**

(21) Application number: **23914550.1**

(22) Date of filing: **26.12.2023**

(51) International Patent Classification (IPC):
*G06T 7/00* (2017.01)　　　*G06V 10/762* (2022.01)
*G06V 10/80* (2022.01)　　　*G06T 7/70* (2017.01)

(86) International application number:
**PCT/CN2023/141971**

(87) International publication number:
**WO 2024/146418 (11.07.2024 Gazette 2024/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **03.01.2023 CN 202310004467**

(71) Applicant: **Beijing Roborock Innovation
Technology Co., Ltd.
Beijing 102206 (CN)**

(72) Inventor: **CAI, Weiyan
Beijing 102200 (CN)**

(74) Representative: **Haseltine Lake Kempner LLP
Cheapside House
138 Cheapside
London EC2V 6BJ (GB)**

(54) **OBSTACLE DETECTION METHOD AND APPARATUS FOR ROBOT, AND MEDIUM AND ELECTRONIC DEVICE**

(57)　Disclosed are an obstacle detection method and apparatus for a robot, and a medium and an electronic device. The method comprises: acquiring three-dimensional point cloud data of an obstacle in a first coordinate system, the first coordinate system being a coordinate system established by a robot at the current position with the robot as the origin; fusing the three-dimensional point cloud data to a grid map with the robot as the center so as to determine obstacle grid points in the grid map; clustering the obstacle grid points to obtain at least one obstacle grid point set; and generating an obstacle object in the grid map according to the obstacle grid point set.

FIG. 2

Description

CROSS-REFERENCE TO RELATED APPLICATIONS

The present application claims priority to Chinese Patent Application No. 202310004467.2, filed on January 3, 2023, which is incorporated herein by reference in its entirety as a part of the present application.

TECHNICAL FIELD

The present disclosure relates to the field of data processing technologies for robots, in particular to an obstacle detection method and apparatus for a robot, a medium and an electronic device.

BACKGROUND

Currently, service robots (e.g., sweeping robots) usually need to move back and forth in a certain area, in which case the robot needs to sense the obstacles in the area to avoid collision with the obstacles. Typically, the robot needs to perform obstacle avoidance movement based on the obstacles, and during the obstacle avoidance movement, the robot needs to determine the obstacle position, shape, and size in real time, so as to improve the control accuracy of the robot's obstacle avoidance movement. Existing solutions generally use radar to sense the location, shape and size of obstacles. However, this obstacle detection method is not accurate enough. Based on this, how to improve the accuracy of obstacle detection by robots is a technical problem that needs to be solved urgently.

SUMMARY

Embodiments of the present disclosure provide an obstacle detection method and apparatus for a robot, a medium and an electronic device, which can improve the accuracy of obstacle detection by robots at least to a certain extent.
Other features and advantages of the present disclosure will become apparent by the following detailed description, or will be acquired, in part, by the practice of the present disclosure.
According to a first aspect of the present disclosure, an obstacle detection method for a robot is provided. The method includes: obtaining three-dimensional point cloud data of an obstacle in a first coordinate system, said first coordinate system being a coordinate system established by said robot at a current position with the robot as the origin; fusing said three-dimensional point cloud data in a robot-centered raster map to determine obstacle raster points in said raster map; performing clustering on said obstacle raster points to obtain at least one set of obstacle raster points; and generating an obstacle object in said raster map based on said set of obstacle raster points.
According to a second aspect of the present disclosure, an obstacle detection apparatus for a robot is provided. The apparatus includes: an obtaining unit configured to obtain three-dimensional point cloud data of an obstacle in a first coordinate system, said first coordinate system being a coordinate system established by said robot at a current position with the robot as the origin; a fusing unit configured to fuse said three-dimensional point cloud data in a robot-centered raster map to determine obstacle raster points in said raster map; a clustering unit configured to perform clustering on said obstacle raster points to obtain at least one set of obstacle raster points; and a generating unit configured to generate an obstacle object in said raster map based on said set of obstacle raster points.
According to a third aspect of the present disclosure, a computer-readable storage medium is provided. The computer-readable storage medium stores at least one computer program instruction which can be loaded and executed by a processor to cause the processor to realize the steps of the method according to the first aspect.
According to a fourth aspect of the present disclosure, an electronic device is provided. The electronic device includes: one or more processors and one or more memories, wherein the one or more memories store at least one computer program instruction which can be loaded and executed by the one or more processors to cause the one or more processors to realize the steps of the method according to the first aspect.
It should be understood that the above general description and the detailed descriptions that follow are merely exemplary and explanatory and do not limit the present disclosure.

BRIEF DESCRIPTION OF THE DRAWINGS

The accompanying drawings, which are herein incorporated into and form a part of the specification, illustrate embodiments consistent with the present disclosure and are used in conjunction with the specification to explain the principles of the present disclosure. It will be apparent that the accompanying drawings in the following description are only some of the embodiments of the present disclosure, and that other accompanying drawings may be obtained from these drawings without creative labor for those of ordinary skill in the art. In the accompanying drawings:

FIG. 1 illustrates a schematic scenario in which a robot uses a linear laser to detect obstacles;

FIG. 2 is a flow chart of the obstacle detection method for a robot according to some embodiments of the present disclosure;

FIG. 3 is a detailed flow chart of obtaining three-dimensional point cloud data of an obstacle in a first coordinate system in FIG. 2;

FIG. 4 is another detailed flow chart of obtaining three-dimensional point cloud data of the obstacle in the first coordinate system in FIG. 2;

FIG. 5 is a presentation diagram of determining obstacle raster points in a raster map in FIG. 2;

FIG. 6 is a detailed flow chart of performing clustering on the obstacle raster points in FIG. 2;

FIG. 7 is a presentation diagram of determining a set of obstacle raster points in the raster map;

FIG. 8 is a detailed flow chart of generating an obstacle object in the raster map based on the set of obstacle raster points in FIG. 2;

FIG. 9 is a presentation diagram of generating the obstacle object in the raster map;

FIG. 10 is a flow chart of controlling a robot to perform obstacle avoidance movement according to some embodiments of the present disclosure;

FIG. 11 is a block diagram of an obstacle detection apparatus for a robot according to some embodiments of the present disclosure; and

FIG. 12 shows a schematic structure of an electronic device according to some embodiments of the present disclosure.

## DETAILED DESCRIPTION

The technical solutions in embodiments of the present disclosure will be clearly and completely described below in conjunction with the accompanying drawings in the embodiments of the present disclosure. Apparently, the described embodiments are only a part of the embodiments of the present disclosure, rather than all of them. All other embodiments obtained by those of ordinary skill in the art based on the embodiments of the present disclosure without creative efforts shall fall within the protection scope of the present disclosure.

In addition, the described features, structures, or characteristics may be combined in one or more embodiments in any suitable manner. In the following description, many specific details are provided, thereby giving a full understanding of the embodiments of the present disclosure. However, those skilled in the art will realize that it is possible to practice the technical solutions of the present disclosure without one or more of the specific details, or that other methods, components, devices, steps and the like may be employed. In other cases, the publicly known methods, devices, implementations, or operations are not shown or described in detail to avoid obscuring aspects of the present disclosure.

The block diagrams shown in the accompanying figures are merely functional entities and do not necessarily have to correspond to physically separate entities. That is, the functional entities may be implemented in a software form, or in one or more hardware modules or integrated circuits, or in different networks and/or processor devices and/or microcontroller devices.

The flowcharts shown in the accompanying drawings are exemplary illustrations only and are not required to include all of the elements and operations/steps, nor are they required to be performed in the order depicted. For example, some operations/steps may also be decomposed, while others may be combined or partially combined, and thus the order in which they are actually performed may change depending on the actual situation.

In the description of the present disclosure, it is to be understood that the terms "first" and "second" are used only for descriptive purposes, and are not to be understood as indicating or implying relative importance or implicitly specifying the number of indicated technical features. Thus, a feature defined with the terms "first" and "second" may expressly or impliedly include one or more such features. In the description of the present disclosure, unless otherwise indicated, "a plurality of" means two or more.

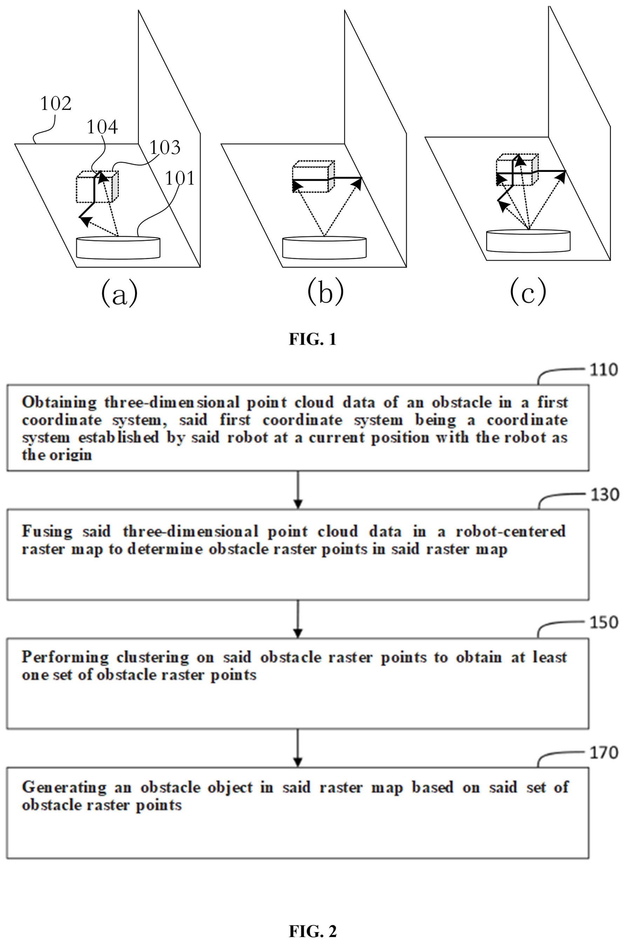

In order to enable those skilled in the art to better understand the present disclosure, the application scenarios covered by the present disclosure are first briefly described in conjunction with FIG. 1.

Referring to FIG. 1, a schematic diagram of a scenario in which a robot uses a linear laser to measure obstacles is shown.

The robot 101 involved in the present disclosure may be a sweeping robot. In the process of performing cleaning tasks, the robot 101 needs to move back and forth in a cleaning area 102. In this case, the robot 101 needs to sense an obstacle 103 (such as a stool and a small table on the floor of a room) in order to avoid collision with the obstacle 103. In general, in order to move normally in the cleaning area 102 without colliding against the obstacle 103, the robot 101 needs to detect the position, shape and size of the obstacle 103 in real time, and plan a moving path per se based on the position, shape and size of the obstacle 103 to avoid collision with the obstacle 103, thereby improving the control accuracy of obstacle avoidance movement of the robot 101.

In the present disclosure, the robot 101 may assist itself in performing the obstacle avoidance movement through the linear laser. In some embodiments, the robot 101 may project the linear laser outward through one or more linear laser modules mounted thereon, and assist itself in performing the obstacle avoidance movement by collecting laser light strips 104 projected on the obstacle 103. When projecting the linear laser outward, the linear laser module may have various projection modes. In some embodiments, as shown in FIG. 1(a), a vertical linear laser projection mode may be adopted; in some other embodiments, as shown in FIG. 1(b), a horizontal linear laser projection mode may be adopted; and in still other embodiments, as shown in FIG. 1(c), a mode of combining the vertical linear laser projection and the horizontal linear laser projection may be adopted.

Referring to FIG. 2, a flow chart of an obstacle detection method for a robot according to some embodiments of the present disclosure is shown, and the obstacle detection method for a robot may be executed by a device with a computing processing function. Referring to FIG. 2, the obstacle detection method for a robot at least includes steps 110 to 170.

In step 110: three-dimensional point cloud data of an obstacle in a first coordinate system is obtained, and said first coordinate system is a coordinate system established by said robot at a current position with the robot as the origin.

In the present disclosure, the three-dimensional point cloud data may be used to characterize the position distribution of the obstacle in the first coordinate system, wherein the first coordinate system is a coordinate system established by the robot at the current position with the robot as the origin. It should be noted here that since the robot is in a moving state in the cleaning area, the position of the coordinate system established with the robot as the origin (that is, the robot coordinate system) also changes in the cleaning area. Although the obstacle does not move in the cleaning area (that is, the obstacle does not move in real time), as the robot coordinate system changes with the robot in the cleaning area, the three-dimensional point cloud data (that is, the position coordinates of the obstacle in the robot coordinate system) reflected by the obstacle in the robot coordinate system will also change.

In the present disclosure, when moving from one position to another, the robot may project the linear laser outward through the linear laser module mounted thereon, and determine the three-dimensional point cloud data (that is, the coordinates of the laser-projected position on the obstacle in the robot coordinate system) of the laser-projected position on the obstacle in the robot coordinate system according to the laser light strips projected on the obstacle.

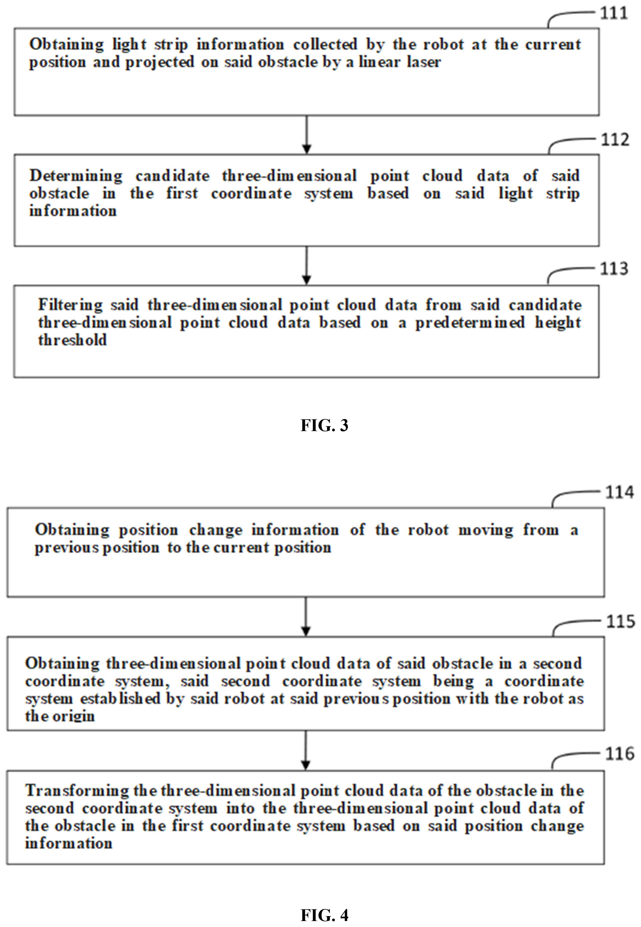

In some embodiments, obtaining the three-dimensional point cloud data of the obstacle in the first coordinate system may be performed according to the steps as shown in FIG. 3.

Referring to FIG. 3, a detailed flow chart of obtaining the three-dimensional point cloud data of the obstacle in the first coordinate system in FIG. 2 is shown and may include steps 111 to 113:

step 111: obtaining light strip information collected by the robot at the current position and projected on said obstacle by the linear laser;

step 112: determining candidate three-dimensional point cloud data of said obstacle in the first coordinate system based on said light strip information; and

step 113: filtering said three-dimensional point cloud data from said candidate three-dimensional point cloud data based on a predetermined height threshold.

In the process of detecting the obstacles, the robot does not need to regard all objects in the cleaning area as the obstacles, such as a piece of paper on the ground. Based on this, in the present disclosure, after determining the candidate three-dimensional point cloud data of said obstacle in the first coordinate system, said three-dimensional point cloud data may be filtered from said candidate three-dimensional point cloud data based on the predetermined height threshold. By the predetermined height threshold, the three-dimensional point cloud data corresponding to some objects on the ground whose heights are not enough for the robot to avoid can be filtered out. In this way, not only can calculative resources needed for performing subsequent data processing on the three-dimensional point cloud data be saved, but also the robot is prevented from making some unnecessary obstacle avoidance actions in the future.

In some embodiments, obtaining the light strip information collected by the robot at the current position and projected on said obstacle by the linear laser may be performed according to steps 1111 to 1113 as follows:

step 1111: obtaining an image of the obstacle acquired by the robot at the current position when the linear laser is in an ON state as a first image;
step 1112: obtaining an image of the obstacle acquired by the robot at the current position when the linear laser is in an OFF state as a second image; and
step 1113: performing differential processing on said first image and said second image to obtain the light strip information projected on said obstacle by the linear laser.

In the present disclosure, both the image of the obstacle when the linear laser is in the ON state and the image of the obstacle when the linear laser is in the OFF state may be acquired by a camera mounted on the robot.

In the present disclosure, a differential image may be obtained by performing differential processing on said first image and said second image, and the light strips with brightness values greater than a predetermined brightness threshold are extracted from the differential image to obtain the light strip information projected on said obstacle by the linear laser.

In other embodiments, obtaining the light strip information collected by the robot at the current position and projected on said obstacle by the linear laser may also include recognizing the light strip information projected on said obstacle from the image of the obstacle by an image recognition algorithm (in some embodiments, the image recognition algorithm may be an image recognition algorithm based on artificial intelligence) after the image of the obstacle collected by the robot at the current position is obtained when the linear laser is in the ON state.

In some embodiments, determining the candidate three-dimensional point cloud data of said obstacle in the first coordinate system based on said light strip information may be performed according to steps 1121 to 1122 as follows:

step 1121: determining, based on a mapping relationship from a camera coordinate system to a pixel coordinate system, obstacle point cloud coordinates in the camera coordinate system for a light strip pixel center in said light strip information; and
step 1122: determining the candidate three-dimensional point cloud data of said obstacle in the first coordinate system based on said obstacle point cloud coordinates and a transformation matrix from said camera coordinate system to said first coordinate system.

It can be understood that the camera coordinate system refers to a coordinate system with an optical center of the camera as the origin and the $z$ axis coinciding with an optical axis of the camera, and the pixel coordinate system refers to a coordinate system established with the vertex at the upper left corner of the image as the origin and with a pixel as the unit.

In the present disclosure, after obtaining the light strip information projected on said obstacle, the light strip pixel center $p = (u, v)$ in the light strip information may be first determined, and then the obstacle point cloud coordinates $P_C = (x, y, z)$ of the light strip pixel center in the camera coordinate system are determined, wherein $u$ and $v$ are coordinate positions of the light strip pixel center on the $x$ axis and $y$ axis of the pixel coordinate system respectively, and $x$, $y$ and $z$ are coordinate positions of the light strip pixel center on the $x$ axis, the $y$ axis and the $z$ axis of the camera coordinate system respectively.

In some embodiments, according to the mapping relationship from the camera coordinate system to the pixel coordinate system,

$$K = \begin{bmatrix} f_x & 0 & u_0 \\ 0 & f_y & v_0 \\ 0 & 0 & 1 \end{bmatrix};$$

wherein $f_x$ and $f_y$ are focal lengths of the camera in the $x$ axis direction and the $y$ axis direction of the pixel coordinate system respectively, and $u_0$ and $v_0$ are coordinate positions of the origin of the camera coordinate system on the $x$ axis and the $y$ axis of the pixel coordinate system respectively.

The following constraint is established:

$$\frac{u - u_0}{f_x} = \frac{x}{z}, \frac{v - v_0}{f_y} = \frac{y}{z}.$$

At the same time, the point from a linear laser light plane must fall on the linear laser light plane. Therefore, for a linear laser light plane equation in the camera coordinate system, the following constraint may be established:

$$A_{laser}x + B_{laser}y + C_{laser}z + D_{laser} = 0 ;$$

wherein $A_{laser}$, $B_{laser}$ and $C_{laser}$ are slopes of the linear laser light plane in the $x$ axis direction, the $y$ axis direction and the $z$ axis direction of the camera coordinate system respectively, and the vector $(A_{laser}, B_{laser}, C_{laser})$ formed by them is a normal vector of the linear laser light plane. $D_{laser}$ is related to the distance from the linear laser light plane to the origin of the camera coordinate system, and the distance is $\dfrac{D_{laser}}{(A_{laser}^2 + B_{laser}^2 + C_{laser}^2)^{\frac{1}{2}}}$ . The constraint equation defines a plane in threedimensional space through the normal vector and the distance from the linear laser light plane to the origin of the camera coordinate system, and the coordinates of any point located on this plane will satisfy this equation.

Thus, the obstacle point cloud coordinates $P_C = (x, y, z)$ of the light strip pixel center in the camera coordinate system may be solved:

$$z = \frac{-D_{laser}}{A_{laser} \times \dfrac{u - u_0}{f_x} + B_{laser} \times \dfrac{v - v_0}{f_y} + C_{laser}} ;$$

$$x = \frac{u - u_0}{f_x} \times z = \frac{u - u_0}{f_x} \times \frac{-D_{laser}}{A_{laser} \times \dfrac{u - u_0}{f_x} + B_{laser} \times \dfrac{v - v_0}{f_y} + C_{laser}} ;$$

and

$$y = \frac{v - v_0}{f_y} \times z = \frac{v - v_0}{f_y} \times \frac{-D_{laser}}{A_{laser} \times \dfrac{u - u_0}{f_x} + B_{laser} \times \dfrac{v - v_0}{f_y} + C_{laser}} .$$

After solving the obstacle point cloud coordinates $P_C = (x, y, z)$ in the camera coordinate system, through the transformation matrix from the camera coordinate system to the first coordinate system (that is, the robot coordinate system when the robot is at the current position):

$$T_{RC} = \begin{bmatrix} R_{RC} & t_{RC} \\ 0 & 1 \end{bmatrix} ;$$

wherein $R_{RC}$ is a rotation matrix and is a $3 \times 3$ matrix, which is used to characterize a rotational relationship between the camera coordinate system and the first coordinate system, and $t_{RC}$ is a translation vector and is a $3 \times 1$ vector, which is used to characterize a translation amount of the origin of the camera coordinate system relative to the $x$ axis, the $y$ axis and the $z$ axis of the first coordinate system.

The candidate three-dimensional point cloud *data* $P_R = (x_R, y_R, z_R)$ of the obstacle in the first coordinate system may be recovered:

$$P_R = T_{RC} \times P_C = \begin{bmatrix} R_{RC} & t_{RC} \\ 0 & 1 \end{bmatrix} \times (x, y, z)^T = (x_R, \ y_R, z_R) \ ;$$

wherein $x_R$, $y_R$ and $z_R$ are coordinate positions of the obstacle on the x axis, the y axis and the z axis of the first coordinate system respectively.

In some embodiments, obtaining the three-dimensional point cloud data of the obstacle in the first coordinate system may also be performed according to the steps as shown in FIG. 4.

Referring to FIG. 4, another detailed flow chart of obtaining the three-dimensional point cloud data of the obstacle in the first coordinate system in FIG. 2 is shown and may include steps 114 to 116:

step 114: obtaining position change information of the robot moving from a previous position to the current position;
step 115: obtaining three-dimensional point cloud data of said obstacle in a second coordinate system, said second coordinate system being a coordinate system established by said robot at said previous position with the robot as the origin; and
step 116: transforming the three-dimensional point cloud data of the obstacle in the second coordinate system into the three-dimensional point cloud data of the obstacle in the first coordinate system based on said position change information.

In the present disclosure, although the obstacle does not move in the cleaning area, as the robot coordinate system changes with the position of the robot in the cleaning area, the three-dimensional point cloud data (that is, the position coordinates of the obstacle in the robot coordinate system) reflected by the obstacle in the robot coordinate system will also change. Based on this, it is necessary to convert the three-dimensional point cloud data in the robot coordinate system when the obstacle is at a historical position into those in the robot coordinate system when the obstacle is at the current position. In some embodiments, based on the position change information of the robot moving from the previous position to the current position, the three-dimensional point cloud data of the obstacle in the second coordinate system (the coordinate system established by the robot at said previous position with the robot as the origin) may be converted into the three-dimensional point cloud data in said first coordinate system.

With continued reference to FIG. 2, in step 130, said three-dimensional point cloud data is fused in a robot-centered raster map to determine obstacle raster points in said raster map.

In the present disclosure, in order to fuse the three-dimensional point cloud data of the obstacle in the robot coordinate system, the raster map with the robot's center as the origin (in some embodiments, the raster map may be a local obstacle two-dimensional raster map) may be established, and the coordinate positions of obstacle points observed during the robot's obstacle avoidance movement relative to the robot coordinate system at the current position are updated on this raster map in real time. When the robot moves, the coordinate positions of the obstacle observed at the historical position are transformed into data in the robot coordinate system of the current position, and continuously updated on this raster map. Through multi-frame linear laser point cloud fusion, scanning of the obstacle, especially the ground obstacle, is formed.

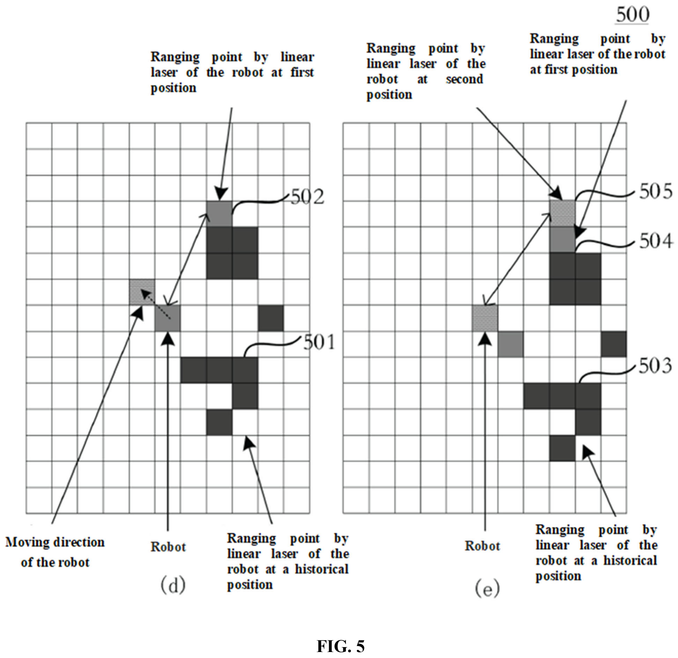

In order to enable those skilled in the art to better understand the present disclosure, the following description will be made with reference to FIG. 5.

Referring to FIG. 5, a presentation diagram 500 of determining the obstacle raster points in the raster map in FIG. 2 is shown.

As shown in FIG. 5(d), when the robot is at a first position, the robot is at the center of the raster map, the raster point 501 is a reflection of the obstacle in the raster map observed by the robot at the historical position through the linear laser, and the raster point 502 is a reflection of the obstacle in the raster map observed by the robot at the first position (the previous position) through the linear laser. After the robot moves from the first position to a second position, the raster map is updated, so that the robot is still at the center of the raster map, as shown in FIG. 5(e). At this time, compared with FIG. 5(d), the relative position between the robot and the obstacle actually changes due to the movement of the robot. In FIG. 5(e), the relative position between the robot and the obstacle raster point in the raster map also changes. When the robot moves to the upper left in the figure, the obstacle raster point in the raster map is equivalent to that the robot moves to the lower right in the raster map. In FIG. 5(e), the raster point 503 is a reflection of the obstacle in the raster map observed through the linear laser at the historical position after the robots moves to the second position (i.e., the current position), and the raster point 504 is a reflection of the obstacle in the raster map observed through the linear laser at the first position after the robot moves to the second position (i.e., the current position), and the raster point 505 is a reflection of the obstacle in the raster map observed through the linear laser at the second position after the robot moves to the second position (i.e., the current position).

With continued reference to FIG. 2, in step 150: said obstacle raster points are clustered to obtain at least one set of obstacle raster points.

In the present disclosure, since the obstacle raster points are the reflections of the obstacle in the raster map, positions of the obstacle with a certain width and length will be reflected in the raster map as a plurality of obstacle raster points with relatively concentrated position distribution. Based on this, said obstacle raster points may be clustered based on distances between the obstacle raster points to obtain at least one set of obstacle raster points.

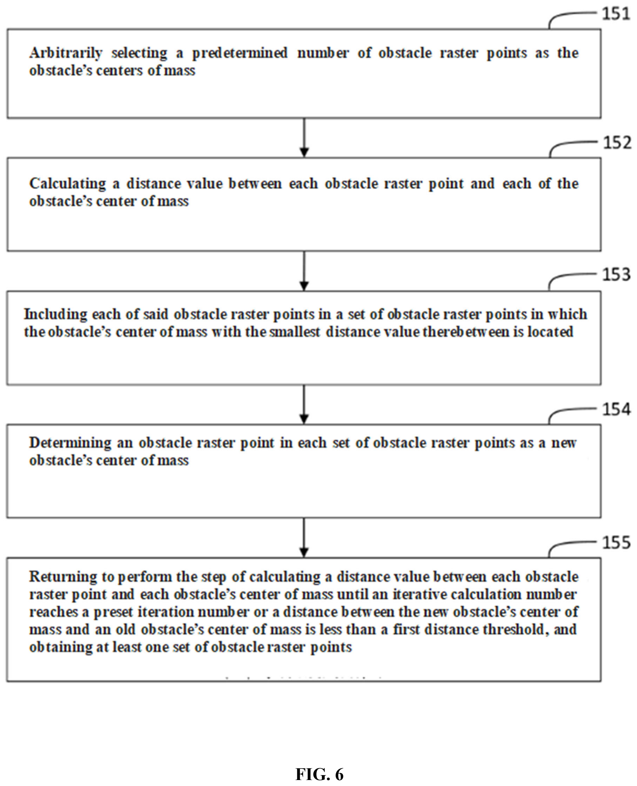

In some embodiments, performing clustering on said obstacle raster points to obtain at least one set of obstacle raster points may be performed according to the steps as shown in FIG. 6.

Referring to FIG. 6, a detailed flow chart of performing clustering on the obstacle raster points in FIG. 2 is shown and may include steps 151 to 155:

step 151: arbitrarily selecting a predetermined number of obstacle raster points as obstacle's centers of mass;
step 152: calculating a distance value between each obstacle raster point and each of the obstacle's centers of mass;
step 153: including each of said obstacle raster points in a set of obstacle raster points in which the obstacle's center of mass with the smallest distance value therebetween is located;
step 154: determining an obstacle raster point in each set of obstacle raster points as a new obstacle's center of mass; and
step 155: returning to perform the step of calculating a distance value between each obstacle raster point and each of the obstacle's centers of mass until the number of the iterative calculation reaches a preset number or a distance between the new obstacle's center of mass and an old obstacle's center of mass is less than a first distance threshold, and obtaining at least one set of obstacle raster points.

In some embodiments, said determining an obstacle raster point in each set of obstacle raster points as a new obstacle's center of mass may be performed according to steps 1541 to 1542 as follows:

step 1541: calculating a mean value of the coordinates of the obstacle raster points in each of the sets of obstacle raster points to obtain mean value coordinates; and
step 1542: determining the obstacle raster point in each of said sets of obstacle raster points whose coordinates are the closest to said mean value coordinates as the new obstacle's center of mass.

In some embodiments, performing clustering on said obstacle raster points to obtain at least one set of obstacle raster points may be completed according to steps a, b, c and d as follows.

In step a: k points are randomly selected from a set of candidate raster points as an initial obstacle's centers of mass $p_k = (x_k, y_k)$, wherein $x_k$ and $z_k$ are coordinate positions of the initial obstacle's centers of mass on the $x$ axis and the $y$ axis of the raster map respectively.

In step b: for each raster point $p_i = (x_i, y_i)$ in the set of candidate raster points, the Euclidean distance

$$d_{ki} = \sqrt{(x_i - x_k)^2 + (y_i - y_k)^2}$$ to k obstacle's centers of mass is calculated respectively, and this raster point is assigned to the set of obstacle raster points to which the closest obstacle's center of mass belongs, wherein $x_i$ and $y_i$ are coordinate positions of the $i^{th}$ raster point on the $x$ axis and $y$ axis of the raster map respectively.

In step c: for the set of obstacle raster points to which each obstacle's center of mass belongs, the mean value of the coordinates of all rasters in the corresponding set is calculated, and the mean value of the coordinates is updated as the new obstacle's center of mass of the obstacle corresponding to the set.

In step d: step b and step c are repeated until the number of the iterative calculation reaches a preset number, or the Euclidean distance between the new obstacle's center of mass and the old obstacle's center of mass is less than the first distance threshold, thereby obtaining at least one set of obstacle raster points.

It should be noted that before step 151 as shown in FIG. 6, that is, before arbitrarily selecting a predetermined number of obstacle raster points as the obstacle's centers of mass, the following steps 141 to 142 may also be performed:

step 141: traversing each obstacle raster point in said raster map, and determining a probability for said obstacle raster point, said probability being used to characterize a confidence level that said obstacle raster point is used to reflect an obstacle; and
step 142: if said probability is less than or equal to a probability threshold, determining said obstacle raster point as a noise raster point and excluding said noise raster point from said raster map.

In the present disclosure, when the linear laser is actually used to observe the obstacle, jumping or noisy points of ranging values will be occasionally generated inevitably due to various uncertain factors. As the requirement on the robot obstacle avoidance accuracy is high and the robot obstacle avoidance movement is relatively sensitive in control, in order to avoid the influence of the obstacle's noisy points on the stability and fluency of the robot obstacle avoidance movement, it is necessary to filter out some noise raster points in the raster map.

In the present disclosure, each obstacle raster point in the raster map correspondingly has one probability used to characterize the confidence level that the obstacle raster point is used to reflect the obstacle, and the greater the probability, the higher the confidence level. The probability value is related to the number that each position in the obstacle is scanned by the linear laser. For a certain position on the obstacle, the greater the number that the position is scanned by the linear laser at present and in history, the more the position is embodied in the three-dimensional point cloud data, so that the probability of the corresponding obstacle raster point of the position in the raster map is greater, and further the confidence level of the corresponding obstacle raster point is higher.

In the present disclosure, the obstacle raster points in the raster map may be traversed, and whether the probabilities of the obstacle raster points are greater than the probability threshold is judged to filter the sets of candidate raster points meeting obstacle judgment conditions (i.e., eliminate the noise raster points). By eliminating the noise raster points, the accuracy of the obstacle raster points in the raster map can be improved, which is beneficial for improving the accuracy of subsequent obstacle recognition and improving the accuracy and efficiency of the robot obstacle avoidance movement.

In some embodiments, the operation of filtering the noisy points may be continuously performed, that is, for each candidate raster point in the set of candidate raster points, whether the number of raster points that are also judged as the candidate raster points is greater than a number threshold within a window of a certain size in the neighborhood thereof may be judged respectively. In some embodiments, for each candidate raster point, whether the number of candidate raster points in the $3\times3$ neighborhood thereof (that is, among 9 raster points) is greater than 3 is judged. If the number condition is met, the next step is entered; otherwise, the candidate raster point is considered as an isolated noise raster point, and filtered out of the set of candidate raster points.

In some embodiments, after obtaining at least one set of obstacle raster points, the following steps 161 to 162 may be further performed:

step 161: in any set of obstacle raster points, if a variance of the distance between the respective obstacle raster points and the obstacle's center of mass is greater than a variance threshold, dividing said any set of obstacle raster points into at least two sets of obstacle raster points; and
step 162: if the distance between the obstacle's centers of mass of any two sets of obstacle raster points is less than a second distance threshold, combining said any two sets of obstacle raster points into one set of obstacle raster points.

In the present disclosure, after at least one set of obstacle raster points is obtained, the accuracy of the set of obstacle raster points reflecting a real obstacle can be enhanced by adjusting the set of obstacle raster points, which is beneficial for improving the accuracy of subsequent obstacle recognition and improving the accuracy and efficiency of the robot obstacle avoidance movement.

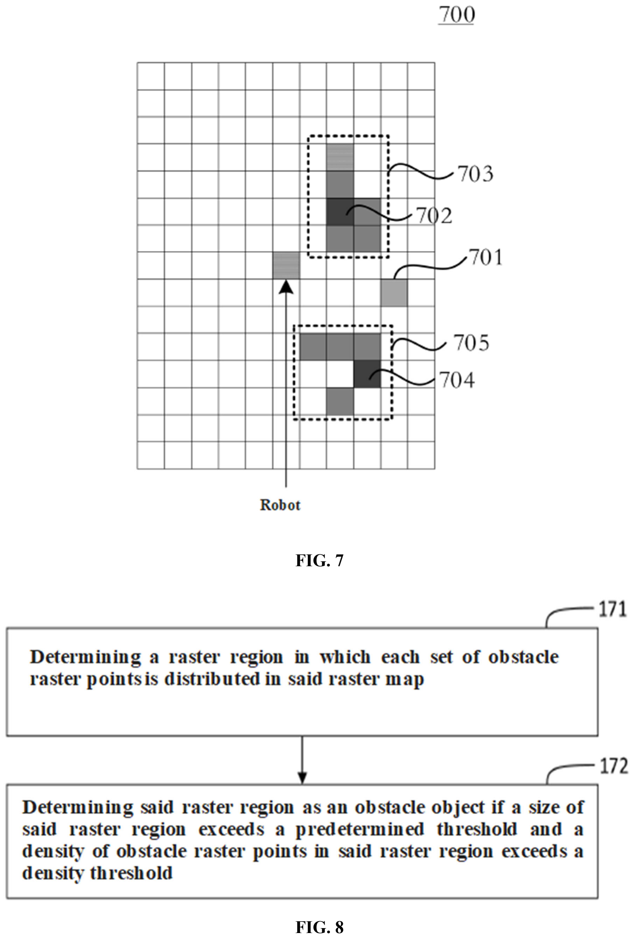

In order to enable those skilled in the art to better understand the set of obstacle raster points, the following description will be made with reference to FIG. 7. Referring to FIG. 7, a presentation diagram of determining the set of obstacle raster points in the raster map is shown.

As shown in FIG. 7, the raster map includes a noise raster point 701, a set of obstacle raster points 703 and an obstacle raster point 705. A raster point 702 and a raster point 704 are the obstacle's centers of mass of the set of obstacle raster points 703 and the obstacle raster point 705 respectively.

With continued reference to FIG. 2, in step 170: an obstacle object is generated in said raster map based on said set of obstacle raster points.

In some embodiments, generating the obstacle object in said raster map based on said set of obstacle raster points may be performed according to the steps as shown in FIG. 8.

Referring to FIG. 8, a detailed flow chart of generating the obstacle object in the raster map based on the set of obstacle raster points in FIG. 2 is shown and may include steps 171 to 172:

step 171: determining a raster region in which each set of obstacle raster points is distributed in said raster map; and
step 172: determining said raster region as the obstacle object if a size of said raster region exceeds a predetermined threshold and a density of the obstacle raster points in said raster region exceeds a density threshold.

For the set of obstacle raster points obtained by clustering, the number of each set of raster points, and the x-coordinate minimum value, the x-coordinate maximum value, the y-coordinate minimum value and the y-coordinate maximum value of these raster points are counted to obtain an x-coordinate range and a y-coordinate range of each set; that is, the raster region of this set distributed in the raster map, and the width and length of the raster region in the raster map can be determined. When the width and length of the raster region both exceed edge length thresholds (i.e., predetermined thresholds) of a robot navigation module for obstacle avoidance, and the density of the obstacle raster points in the raster region (the density may be solved by dividing the number of obstacle raster points in the set of obstacle raster points by the corresponding raster region area) is greater than a certain threshold (i.e., the density threshold), it is considered that the raster points in the set of obstacle raster points meet obstacle avoidance requirements, and the corresponding raster region is output as the obstacle object to the robot navigation module for obstacle avoidance.

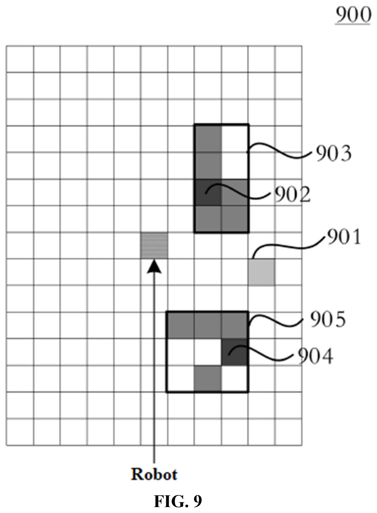

In order to enable those skilled in the art to better understand the obstacle object, the following description will be made with reference to FIG. 9.

Referring to FIG. 9, a presentation diagram of generating the obstacle object in the raster map is shown.

As shown in FIG. 9, the raster map includes a noise raster point 901, an obstacle object 903 and an obstacle object 905. A raster point 902 and a raster point 904 are the obstacle's centers of mass of the obstacle object 903 and of the obstacle object 905 respectively.

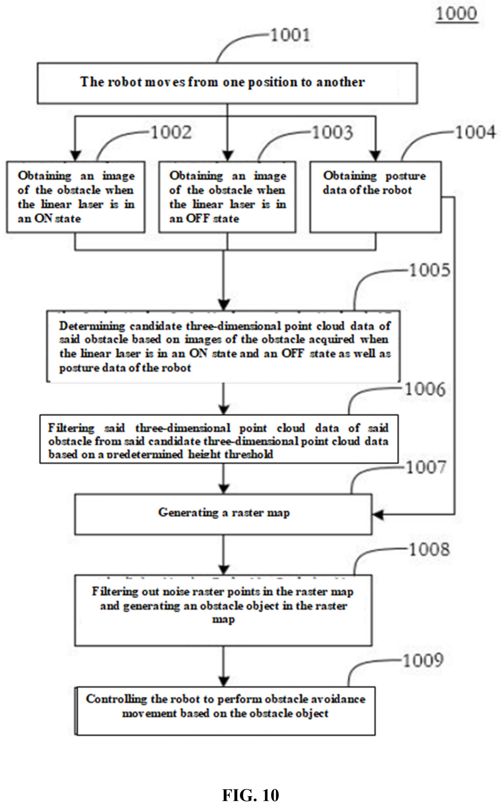

In order to enable those skilled in the art to better understand the present disclosure as a whole, the application process of the present disclosure solution will be briefly described with an embodiment in conjunction with FIG. 10:

Referring to FIG. 10, a flow chart for controlling a robot to perform obstacle avoidance movement according to some embodiments of the present disclosure is shown and may include steps 1001 to 1009:

step 1001: enabling a robot to move from one position to another;

step 1002: obtaining an image of an obstacle when the linear laser is in an ON state;

step 1003: obtaining an image of the obstacle when the linear laser is in an OFF state;

step 1004: obtaining posture data of the robot;

step 1005: determining candidate three-dimensional point cloud data of the obstacle based on the images of the obstacle acquired when the linear laser is in the ON state and the OFF state as well as the posture data of the robot;

step 1006: filtering three-dimensional point cloud data of the obstacle from the candidate three-dimensional point cloud data by a height threshold;

step 1007: generating a two-dimensional raster map based on the three-dimensional point cloud data and the posture data of the robot;

step 1008: filtering out noise raster points in the raster map and generating an obstacle object in the raster map; and

step 1009: controlling the robot to perform the obstacle avoidance movement based on the obstacle object.

In the present disclosure, three-dimensional point cloud data of an obstacle in a coordinate system established at a current location with the robot as the origin is obtained, and said three-dimensional point cloud data is fused in a robot-centered raster map to determine obstacle raster points in said raster map. Then, at least one set of obstacle raster points is obtained by clustering said obstacle raster points, and an obstacle object is generated in said raster map based on said set of obstacle raster points. Since the three-dimensional point cloud data of the obstacle in the robot coordinate system can accurately reflect the obstacle's position, shape and size, by fusing the three-dimensional point cloud data into the robot-centered raster map, it is ensured that the obstacle raster points in the raster map accurately reflect the obstacle's position, shape and size. Therefore, the obstacle object generated based on at least one set of obstacle raster points obtained by clustering said obstacle raster points can improve the obstacle detection accuracy, and thus improve the accuracy of the robot's obstacle avoidance movement.

The following describes apparatus embodiments of the present disclosure that can be used to perform the obstacle detection method for a robot of the above-described embodiments of the present disclosure. For details not disclosed in the apparatus embodiments of the present disclosure, please refer to the embodiments of the obstacle detection method for a robot described above in the present disclosure.

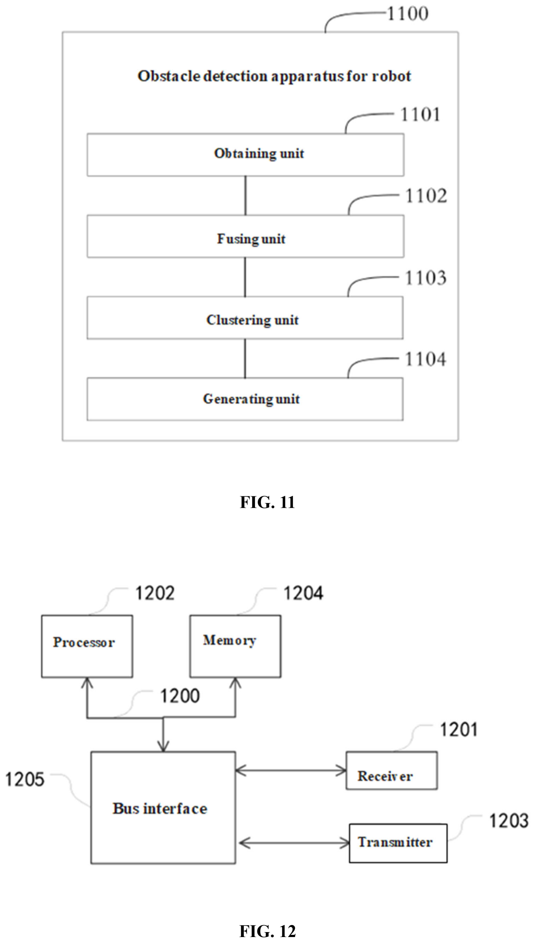

Refer to FIG. 11, which shows a block diagram of an obstacle detection apparatus for a robot according to some embodiments of the present disclosure.

As shown in FIG. 11, the obstacle detection apparatus 1100 for a robot can include: an obtaining unit 1101, a fusing unit 1102, a clustering unit 1103 and a generating unit 1104.

In some embodiments, the obtaining unit 1101 is configured to obtain three-dimensional point cloud data of an obstacle in a first coordinate system, said first coordinate system being a coordinate system established by said robot at a current position with the robot as the origin. The fusing unit 1102 is configured to fuse said three-dimensional point cloud data in a robot-centered raster map to determine obstacle raster points in said raster map. The clustering unit 1103 is configured to perform clustering on said obstacle raster points to obtain at least one set of obstacle raster points. The generating unit 1104 is configured to generate an obstacle object in said raster map based on said set of obstacle raster points.

In some embodiments, the obtaining unit 1101 is configured to: obtain light strip information collected by the robot at the current position and projected on said obstacle by a linear laser; determine candidate three-dimensional point cloud data of said obstacle in the first coordinate system based on said light strip information; and filter said three-dimensional point cloud data from said candidate three-dimensional point cloud data based on a predetermined height threshold.

In some embodiments, the obtaining unit 1101 is further configured to: obtain an image of the obstacle acquired by the robot at the current position when the linear laser is in an ON state as a first image; obtain an image of the obstacle acquired by the robot at the current position when the linear laser is in an OFF state as a second image; and perform differential processing on said first image and said second image to obtain the light strip information projected on said obstacle by the linear laser.

In some embodiments, the obtaining unit 1101 is further configured to: determine, based on a mapping relationship from a camera coordinate system to a pixel coordinate system, obstacle point cloud coordinates of a light strip pixel center of said light strip information in the camera coordinate system; and determine the candidate three-dimensional point cloud data of said obstacle in the first coordinate system based on said obstacle point cloud coordinates and a transformation matrix from said camera coordinate system to said first coordinate system.

In some embodiments, the obtaining unit 1101 is further configured to: obtain position change information of the robot moving from a previous position to the current position; obtain three-dimensional point cloud data of said obstacle in a second coordinate system, said second coordinate system being a coordinate system established by said robot at said previous position with the robot as the origin; and transform the three-dimensional point cloud data of the obstacle in the second coordinate system into the three-dimensional point cloud data of the obstacle in the first coordinate system based on said position change information.

In some embodiments, the clustering unit 1103 is configured to: arbitrarily select a predetermined number of obstacle raster points as the obstacle's centers of mass; calculate a distance value between each obstacle raster point and each of the obstacle's center of mass; include each of said obstacle raster points in a set of obstacle raster points in which the obstacle's center of mass with the smallest distance value therebetween is located; determine an obstacle raster point in each set of obstacle raster points as a new obstacle's center of mass; and return to perform the step of calculating a distance value between each obstacle raster point and each obstacle's center of mass until an iterative calculation number reaches a preset iteration number or a distance between the new obstacle's center of mass and an old obstacle's center of mass is less than a first distance threshold, and obtain at least one set of obstacle raster points.

In some embodiments, the apparatus further includes: a traversing unit configured to: before arbitrarily selecting a predetermined number of obstacle raster points as the obstacle's centers of mass, traverse each obstacle raster point in said raster map, determine a probability for said obstacle raster point, said probability being used to characterize a confidence level that said obstacle raster point is used to reflect the obstacle; and if said probability is less than or equal to a probability threshold, determine said obstacle raster point as a noise raster point and exclude said noise raster point from said raster map.

In some embodiments, the clustering unit 1103 is further configured to: calculate a mean value of the coordinates of the obstacle raster points in each of the sets of obstacle raster points to obtain mean value coordinates; and determine the obstacle raster point in each of said sets of obstacle raster points whose coordinates are the closest to said mean value coordinates as the new obstacle's center of mass.

In some embodiments, the apparatus further includes: an adjustment unit configured to: after obtaining at least one set of obstacle raster points, in any set of obstacle raster points, if a variance of the distance between the respective obstacle raster points and the obstacle's center of mass is greater than a variance threshold, divide said any set of obstacle raster points into at least two sets of obstacle raster points; and if the distance between the obstacle's centers of mass of any two sets of obstacle raster points is less than a second distance threshold, combine said any two sets of obstacle raster points into one set of obstacle raster points.

In some embodiments, the generating unit 1104 is configured to: determine a raster region in which each set of obstacle raster points is distributed in said raster map; and determine said raster region as an obstacle object if a size of said raster region exceeds a predetermined threshold and a density of obstacle raster points in said raster region exceeds a density threshold.

Based on the same idea, embodiments of the present disclosure provide a computer-readable storage medium, said computer-readable storage medium having stored therein at least one computer program instruction, said at least one computer program instruction being loaded and executed by a processor to implement operations performed by an obstacle detection method for a robot as described above.

Based on the same idea, embodiments of the present disclosure also provide an electronic device, and with reference to FIG. 12, a schematic diagram of the structure of an electronic device in accordance with some embodiments of the present disclosure is shown. The electronic device includes one or more memories 1204, one or more processors 1202, and at least one computer program (computer program instructions) stored in the memory 1204 and operable on the processor 1202. When the processor 1202 executes said computer program, the obstacle detection method for a robot as previously described is realized.

Among other things, in FIG. 12, for the bus architecture (represented by a bus 1200), the bus 1200 may include any number of interconnected buses and bridges, and the bus 1200 links together various circuits including one or more processors represented by a processor 1202, and a memory represented by a memory 1204. The bus 1200 may also link together various other circuits such as peripherals, voltage regulators, and power management circuits, which are well known in the art and, therefore, are not described further herein. A bus interface 1205 provides an interface between the bus 1200 and a receiver 1201 and a transmitter 1203. The receiver 1201 and the transmitter 1203 may be the same element, i.e., a transceiver, providing units for communicating with a variety of other devices on a transmission medium. The processor 1202 is responsible for managing the bus 1200 and the usual processing, while the memory 1204 may be used to store data used by the processor 1202 in performing operations.

The functions described herein may be implemented in hardware, software executed by a processor, firmware, or any combination thereof. If implemented in processorexecuted software, the functions may be stored on or transmitted via computer-readable media as one or more instructions or codes. Other examples and embodiments are within the scope and spirit of this disclosure and the appended claims. By way of example, attributable to the nature of software, the functions described above may be implemented using software executed by a processor, hardware, firmware, hardwiring, or a combination of any of these. In addition, the functional units may be integrated in a single processing unit, or the units may physically exist separately, or two or more units may be integrated in a single unit.

In the several embodiments provided in the present disclosure, it should be understood that the technical content, as disclosed, can be realized in other ways. Among other things, the above-described embodiments of the device are merely schematic. For example, the division of the described units, which may be a logical functional division, may be divided in another way when actually implemented. For example, multiple units or components may be combined or may be integrated into another system, or some features may be ignored or may not be implemented. As another point, the coupling or direct coupling or communication connection between each other shown or discussed may be through some interface, indirect coupling or communication connection of units or modules, which may be electrical or otherwise.

The units illustrated as separate components may or may not be physically separate, and the components as control devices may or may not be physical units, i.e., they may be located in one place or may be distributed over a plurality of units. Some or all of these units can be selected to fulfil the purpose of the present embodiment according to the actual need.

Said integrated units may be stored in a computer-readable storage medium if implemented as software functional units and sold or used as standalone products. Based on this understanding, the technical solution of the present disclosure, in essence or as a contribution to the related art, or all or part of the technical solution, may be embodied in the form of a software product, which is stored in a storage medium and comprises a number of instructions to cause a computer device (which may be a personal computer, a server, or a network device, etc.) to perform all or part of the steps of the method described in various embodiments of the present disclosure. The aforementioned storage medium includes a USB flash drive, read-only memory (ROM, Read-Only Memory), random-access memory (RAM, Random Access Memory), a removable hard disk, a magnetic disk or an optical disk, and other media that can store computer program instructions.

In the present disclosure, three-dimensional point cloud data of an obstacle in a coordinate system established at a current location with the robot as the origin is obtained, and said three-dimensional point cloud data is fused in a robot-centered raster map to determine obstacle raster points in said raster map. Then, at least one set of obstacle raster points is obtained by clustering said obstacle raster points, and an obstacle object is generated in said raster map based on said set of obstacle raster points. Since the three-dimensional point cloud data of the obstacle in the robot coordinate system can accurately reflect the obstacle's position, shape and size, by fusing the three-dimensional point cloud data into the robot-centered raster map, it is ensured that the obstacle raster points in the raster map accurately reflect the obstacle's position, shape and size. Therefore, the obstacle object generated based on at least one set of obstacle raster points obtained by clustering said obstacle raster points can improve the obstacle detection accuracy, and thus improve the accuracy of the robot's obstacle avoidance movement.

The foregoing are merely embodiments of the present disclosure and are not intended to limit the present disclosure, which may be subject to various changes and variations for those skilled in the art. Any modifications, equivalent substitutions, improvements, etc. made within the spirit and principles of the present disclosure shall be included in the scope of the claims of the present disclosure.

**Claims**

1.  An obstacle detection method for a robot, comprising:

    obtaining three-dimensional point cloud data of an obstacle in a first coordinate system, said first coordinate system being a coordinate system established by said robot at a current position with the robot as the origin;
    fusing said three-dimensional point cloud data in a robot-centered raster map to determine obstacle raster points in said raster map;
    performing clustering on said obstacle raster points to obtain at least one set of obstacle raster points; and
    generating an obstacle object in said raster map based on said set of obstacle raster points.

2. The method according to claim 1, wherein said obtaining three-dimensional point cloud data of an obstacle in a first coordinate system comprises:

> obtaining light strip information collected by the robot at the current position and projected on said obstacle by a linear laser;
> determining candidate three-dimensional point cloud data of said obstacle in the first coordinate system based on said light strip information; and
> filtering said three-dimensional point cloud data from said candidate three-dimensional point cloud data based on a predetermined height threshold.

3. The method according to claim 2, wherein said obtaining light strip information collected by the robot at the current position and projected on said obstacle by a linear laser comprises:

> obtaining an image of the obstacle acquired by the robot at the current position when the linear laser is in an ON state as a first image;
> obtaining an image of the obstacle acquired by the robot at the current position when the linear laser is in an OFF state as a second image; and
> performing differential processing on said first image and said second image to obtain the light strip information projected on said obstacle by the linear laser.

4. The method according to claim 2, wherein said determining candidate three-dimensional point cloud data of said obstacle in the first coordinate system based on said light strip information comprises:

> determining, based on a mapping relationship from a camera coordinate system to a pixel coordinate system, obstacle point cloud coordinates of a light strip pixel center of said light strip information in the camera coordinate system; and
> determining the candidate three-dimensional point cloud data of said obstacle in the first coordinate system based on said obstacle point cloud coordinates and a transformation matrix from said camera coordinate system to said first coordinate system.

5. The method according to claim 2, wherein said obtaining three-dimensional point cloud data of an obstacle in a first coordinate system further comprises:

> obtaining position change information of the robot moving from a previous position to the current position;
> obtaining three-dimensional point cloud data of said obstacle in a second coordinate system, said second coordinate system being a coordinate system established by said robot at said previous position with the robot as the origin; and
> transforming the three-dimensional point cloud data of the obstacle in the second coordinate system into the three-dimensional point cloud data of the obstacle in the first coordinate system based on said position change information.

6. The method according to claim 1, wherein said performing clustering on said obstacle raster points to obtain at least one set of obstacle raster points comprises:

> arbitrarily selecting a predetermined number of obstacle raster points as the obstacle's centers of mass;
> calculating a distance value between each obstacle raster point and each of the obstacle's centers of mass;
> including each of said obstacle raster points in a set of obstacle raster points in which the obstacle's center of mass with the smallest distance value therebetween is located;
> determining an obstacle raster point in each set of obstacle raster points as a new obstacle's center of mass; and
> returning to perform the step of calculating a distance value between each obstacle raster point and each of the obstacle's centers of mass until an iterative calculation number reaches a preset iteration number or a distance between the new obstacle's center of mass and an old obstacle's center of mass is less than a first distance threshold, and obtaining at least one set of obstacle raster points.

7. The method according to claim 6, wherein before arbitrarily selecting a predetermined number of obstacle raster points as the obstacle's centers of mass, the method further comprises:

> traversing each obstacle raster point in said raster map, and determining a probability for said obstacle raster point, said probability being used to characterize a confidence level that said obstacle raster point is used to reflect the obstacle; and

if said probability is less than or equal to a probability threshold, determining said obstacle raster point as a noise raster point and excluding said noise raster point from said raster map.

8. The method according to claim 6, wherein said determining an obstacle raster point in each set of obstacle raster points as a new obstacle's center of mass comprises:

calculating a mean value of the coordinates of the obstacle raster points in each of the sets of obstacle raster points to obtain mean value coordinates; and

determining the obstacle raster point in each of said sets of obstacle raster points whose coordinates are the closest to said mean value coordinates as the new obstacle's center of mass.

9. The method according to claim 6, wherein after obtaining at least one set of obstacle raster points, the method further comprises:

in any set of obstacle raster points, if a variance of the distance between the respective obstacle raster points and the obstacle's center of mass is greater than a variance threshold, dividing said any set of obstacle raster points into at least two sets of obstacle raster points; and

if the distance between the obstacle's centers of mass of any two sets of obstacle raster points is less than a second distance threshold, combining said any two sets of obstacle raster points into one set of obstacle raster points.

10. The method according to claim 6, wherein said generating an obstacle object in said raster map based on said set of obstacle raster points comprises:

determining a raster region in which each set of obstacle raster points is distributed in said raster map; and

determining said raster region as an obstacle object if a size of said raster region exceeds a predetermined threshold and a density of obstacle raster points in said raster region exceeds a density threshold.

11. An obstacle detection apparatus for a robot, comprising:

an obtaining unit configured to obtain three-dimensional point cloud data of an obstacle in a first coordinate system, said first coordinate system being a coordinate system established by said robot at a current position with the robot as the origin;

a fusing unit configured to fuse said three-dimensional point cloud data in a robot-centered raster map to determine obstacle raster points in said raster map;

a clustering unit configured to perform clustering on said obstacle raster points to obtain at least one set of obstacle raster points; and

a generating unit configured to generate an obstacle object in said raster map based on said set of obstacle raster points.

12. A computer-readable storage medium storing a computer program thereon, wherein the computer program, when loaded and executed by a processor, causes the processor to realize the operations performed by the method according to any one of claims 1 to 10.

13. An electronic device comprising a processor and a memory, wherein the memory stores computer program instructions executable by the processor, and when the processor executes the computer program instructions, operations performed by the method according to any one of claims 1 to 10 are realized.

**FIG. 1**

**FIG. 2**

111

Obtaining light strip information collected by the robot at the current position and projected on said obstacle by a linear laser

112

Determining candidate three-dimensional point cloud data of said obstacle in the first coordinate system based on said light strip information

113

Filtering said three-dimensional point cloud data from said candidate three-dimensional point cloud data based on a predetermined height threshold

**FIG. 3**

114

Obtaining position change information of the robot moving from a previous position to the current position

115

Obtaining three-dimensional point cloud data of said obstacle in a second coordinate system, said second coordinate system being a coordinate system established by said robot at said previous position with the robot as the origin

116

Transforming the three-dimensional point cloud data of the obstacle in the second coordinate system into the three-dimensional point cloud data of the obstacle in the first coordinate system based on said position change information

**FIG. 4**

FIG. 5

151

Arbitrarily selecting a predetermined number of obstacle raster points as the obstacle's centers of mass

152

Calculating a distance value between each obstacle raster point and each of the obstacle's center of mass

153

Including each of said obstacle raster points in a set of obstacle raster points in which the obstacle's center of mass with the smallest distance value therebetween is located

154

Determining an obstacle raster point in each set of obstacle raster points as a new obstacle's center of mass

155

Returning to perform the step of calculating a distance value between each obstacle raster point and each obstacle's center of mass until an iterative calculation number reaches a preset iteration number or a distance between the new obstacle's center of mass and an old obstacle's center of mass is less than a first distance threshold, and obtaining at least one set of obstacle raster points

**FIG. 6**

700

**FIG. 7**

Determining a raster region in which each set of obstacle raster points is distributed in said raster map

Determining said raster region as an obstacle object if a size of said raster region exceeds a predetermined threshold and a density of obstacle raster points in said raster region exceeds a density threshold

**FIG. 8**

FIG. 9

**FIG. 10**

1100

Obstacle detection apparatus for robot

1101

Obtaining unit

1102

Fusing unit

1103

Clustering unit

1104

Generating unit

**FIG. 11**

1202

Processor

1204

Memory

1200

1205

Bus interface

1201

Receiver

1203

Transmitter

**FIG. 12**

## INTERNATIONAL SEARCH REPORT

| International application No. |
|---|
| **PCT/CN2023/141971** |

| A. | CLASSIFICATION OF SUBJECT MATTER |
|---|---|

G06T 7/00(2017.01)i; G06V 10/762(2022.01)i; G06V 10/80(2022.01)i; G06T 7/70(2017.01)i

According to International Patent Classification (IPC) or to both national classification and IPC

| B. | FIELDS SEARCHED |
|---|---|

Minimum documentation searched (classification system followed by classification symbols)

IPC: G06T7/-; G06V10/-

Documentation searched other than minimum documentation to the extent that such documents are included in the fields searched

Electronic data base consulted during the international search (name of data base and, where practicable, search terms used)

CNABS, CNTXT, CNKI: 机器人, 障碍物, 避障, 激光, 坐标系, 点云, 高度, 栅格, 地图, 聚类, 质心, 距离; VEN, USTXT, IEEE: robot, obstacle, laser, coordinate, point cloud, height, grid, map, distance, cluster

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 117011220 A (BEIJING STONE INNOVATION TECHNOLOGY CO., LTD.) 07 November 2023 (2023-11-07)<br>claims 1-13 | 1-13 |
| X | CN 107064955 A (BEIJING AUTOMOTIVE GROUP CO., LTD. et al.) 18 August 2017 (2017-08-18)<br>description, paragraphs [0073]-[0132] | 1, 6-13 |
| Y | CN 107064955 A (BEIJING AUTOMOTIVE GROUP CO., LTD. et al.) 18 August 2017 (2017-08-18)<br>description, paragraphs [0073]-[0132] | 2-5 |
| Y | CN 108662987 A (SOUTHWEST JIAOTONG UNIVERSITY) 16 October 2018 (2018-10-16)<br>description, paragraphs [0033]-[0044] | 2-5 |
| A | CN 111624622 A (KUKA ROBOTICS (GUANGDONG) CO., LTD.) 04 September 2020 (2020-09-04)<br>entire document | 1-13 |

☑ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **05 March 2024** | **07 March 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/141971**

### C. DOCUMENTS CONSIDERED TO BE RELEVANT

| Category* | Citation of document, with indication, where appropriate, of the relevant passages | Relevant to claim No. |
|---|---|---|
| A | CN 112329754 A (SUTENG INNOVATION TECHNOLOGY CO., LTD.) 05 February 2021 (2021-02-05) entire document | 1-13 |
| A | US 2022179081 A1 (HYUNDAI MOTOR CO., LTD. et al.) 09 June 2022 (2022-06-09) entire document | 1-13 |

Form PCT/ISA/210 (second sheet) (July 2022)

**INTERNATIONAL SEARCH REPORT**
Information on patent family members

| International application No. |
| --- |
| **PCT/CN2023/141971** |

| Patent document cited in search report | | | Publication date (day/month/year) | Patent family member(s) | | | Publication date (day/month/year) |
| --- | --- | --- | --- | --- | --- | --- | --- |
| CN | 117011220 | A | 07 November 2023 | None | | | |
| CN | 107064955 | A | 18 August 2017 | None | | | |
| CN | 108662987 | A | 16 October 2018 | CN | 108662987 | B | 08 June 2021 |
| CN | 111624622 | A | 04 September 2020 | CN | 111624622 | B | 02 May 2023 |
| CN | 112329754 | A | 05 February 2021 | CN | 112329754 | B | 14 May 2021 |
| US | 2022179081 | A1 | 09 June 2022 | KR | 20220078219 | A | 10 June 2022 |

Form PCT/ISA/210 (patent family annex) (July 2022)

**EP 4 648 005 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310004467